(19) Europäisches Patentamt
European Patent Office
Office européen des brevets

(11) **EP 1 770 895 A1**

(12) **EUROPEAN PATENT APPLICATION**

(43) Date of publication:
**04.04.2007 Bulletin 2007/14**

(51) Int Cl.:
*H04L 1/18* (2006.01)   *H04L 1/00* (2006.01)
*H04L 1/16* (2006.01)

(21) Application number: **05108963.9**

(22) Date of filing: **28.09.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Koninklijke Philips Electronics N.V.
5621 BA  Eindhoven (NL)**

(72) Inventor: **The designation of the inventor has not yet been filed**

(74) Representative: **van der Veer, Johannis Leendert et al
Philips
Intellectual Property & Standards
P.O. Box 220
5600 AE  Eindhoven (NL)**

(54) **Transmission rate adaptation with incremental redundancy**

(57)    The invention relates to a method for use in a packet-switched communication system, the method comprising sending a plurality of data packets from a source node to a destination node; sending an acknowledgement from the destination node to the source node for each packet indicating whether each data packet has been correctly received; and determining a rate at which to transmit each of said data packets from the source node to the destination node on the basis of the received acknowledgements relating to each of the previously transmitted data packets in said plurality of packets.

FIG. 2

**Description**

The invention relates to packet-switched wireless communication systems, and in particular relates to a method and apparatus for a packet-switched wireless communication system by which the data throughput can be maximized.

In some wireless communication systems, such as specified in IEEE 802.11 standards for wireless LANS, a packet switched approach is adopted whereby the transmitter sends information to a receiver in blocks of data called packets. The packets can be transmitted from the base station to different mobile receivers, and vice versa, in a centralized network, or in an adhoc manner in a peer-to-peer network. The effective rate at which data is transferred from the transmitters to the receivers is known as the throughput.

Only packets that are received correctly contribute towards the effective data throughput. The throughput is defined as the average number of bits received correctly in the communication system per second.

In order to obtain a high throughput in a time varying channel, one solution is to adapt the transmission power. However, since the transmission power is often limited by regulations, this solution may not always be viable. An alternative solution is to adapt the rate at which data is transmitted.

If full channel state information (CSI) is available at the transmitter before the packet is transmitted, rate adaptation is straightforward and leads to the largest possible throughput. It is, however, more common that partial channel state information is available. In addition, the information is delayed or causal. In most current systems (such as 802.11 a), only a single acknowledge (ACK) bit describing whether the previous packet is correctly received is available. Moreover, when the system is initialized, the first packet that is transmitted does not even have partial channel state information available. These practical considerations make rate adaptation an extremely challenging problem.

There is therefore a need for a method and apparatus for a packet switched wireless communication system that allows the data throughput to be maximized.

According to a first aspect of the invention, there is provided a method for use in a packet-switched communication system, the method comprising:

- sending a plurality of data packets from a source node to a destination node;
- sending an acknowledgement from the destination node to the source node for each packet indicating whether each data packet has been correctly received; and
- determining a rate at which to transmit each of said data packets from the source node to the destination node on the basis of the received acknowledgements relating to each of the previously transmitted data packets in said plurality of packets.

In one example, rate is selected from a set of predefined rates, wherein there is a predefined rate in the set for each possible combination of received acknowledgements relating to each of the previously transmitted packet or packets. The set of predefined rates may be stored in the source node.

The set of predefined rates may be stored in the destination node, and the destination node may then determine the rate used to transmit each packet on the basis of the acknowledgements sent to the source node relating to each of the previously received packets.

The source node may indicate the rate used to transmit each packet to the destination node. In such a case, the source node may indicate the rate used to transmit each packet to the destination node in a header of the packet.

After a predetermined number of packets K, the received acknowledgements for each of the K previously transmitted packets may be ignored when determining the rate at which to send the K+1th and subsequent packets.

According to another aspect of the present invention, there is provided a source node for use in a packet-switched communication system, the source node comprising:

- means for sending a plurality of data packets to a destination node;
- means for receiving an acknowledgement from the destination node for each packet indicating whether each data packet has been correctly received; and
- means for determining a rate at which to transmit each of said data packets to the destination node on the basis of the received acknowledgements relating to each of the previously transmitted data packets in said plurality of packets.

According to another aspect of the present invention, there is provided a destination node for use in a packet-switched communication system, the destination node comprising:

- means for receiving a plurality of data packets from a source node;
- means for generating and sending an acknowledgement to the source node for each packet indicating whether each data packet has been correctly received; and
- means for determining a rate at which each of said data packets will be sent from the source node, the rate being determined on the basis of the sent acknowledgements relating to each of the previously received data packets in said plurality of packets.

Another aspect of the present invention provides a packet switched communication system incorporating apparatus according to the other aspects of the invention described above.

The invention will now be described, by way of example only, with reference to the following drawings, in which:

Fig. 1 shows a wireless communication system according to the invention;
Fig. 2 is a flow chart illustrating the steps in a method according to the invention;
Fig. 3 is an illustration of a rate tree in accordance with the invention;
Fig. 4 is a graph illustrating the throughput achieved using an optimal rate tree according to the invention in a system that uses independent packet-by-packet decoding;
Fig. 5 shows a K-packet structure used in a system that uses cross-packet decoding;
Fig. 6 is a graph illustrating the throughput achieved using an optimal rate tree according to the invention in a system that uses cross-packet decoding.

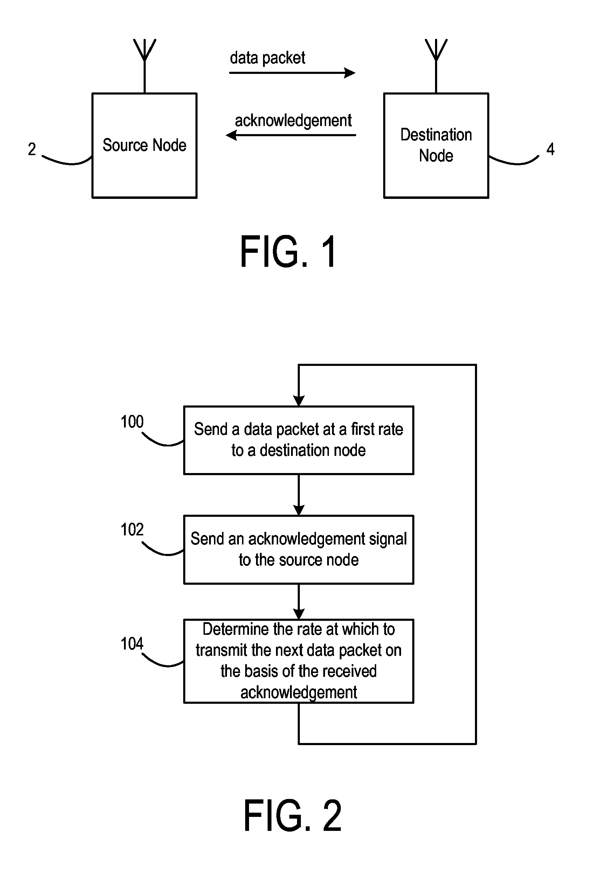

Fig. 1 shows a wireless communications system according to the invention comprising a source node 2 and a destination node 4. The source node 2 divides data to be transmitted into a number of packets, and transmits each packet in turn to the destination node 4.

When the destination node 4 receives a packet, some error detection operation is performed to determine if the packet has been correctly received, and the destination node 4 sends an acknowledgement signal to the source node 2. In preferred embodiments of the invention, the acknowledgement signal comprises a single bit, with one value (say '1') indicating that the packet has been received without errors and the other value (say '0') indicating that there errors in the received packet.

In the following description of the invention, a number of assumptions about the communications system have been made. Firstly, the acknowledgement (ACK) signal is error and delay free. Secondly, the acknowledgement signal is received at the source node 2 before the next transmission is made. Thirdly, the destination node 4 knows the rate used for transmission by the source node 2. Fourthly, the average signal-to-noise ratio (SNR) and the channel distribution are known. The channel distribution can be based on models obtained from some channel measurement operation, and the average SNR is a parameter that changes slowly and can be calculated accurately over a long observation period, or set to some fixed value corresponding to the worst-case scenario. This assumption allows the average data throughput to be determined. A fifth assumption is that the packet period is fixed. If the packet period is fixed, the data rate is then increased or reduced by transmitting more or less bits per packet respectively.

Fig. 2 illustrates a method in accordance with the invention. In step 100, a data packet is transmitted at a first data rate from the source node 2 to the destination node 4. The first data rate may be selected as a default data rate, or may be selected based on the success or failure of previous transmissions by the source node 2.

In step 102, the destination node 4 examines the received packet to determine if the packet has been received correctly, i.e. without errors. This examination may comprise deriving a parity bit from the received data and comparing this parity bit to a parity bit transmitted in the data packet, or may comprise using any other known error detection algorithm. Once the examination is complete, the destination node 4 sends an acknowledgement signal to the source node 2, which indicates whether the received data packet was received successfully. In a preferred embodiment of the invention, the acknowledgement signal comprises a single bit.

In step 104, the source node 2 determines the data rate (the second data rate) at which to transmit the next data packet (the second data packet) to the destination node 4. The second data rate is determined on the basis of the content of the acknowledgement signal for the first packet received from the destination node 4. If the acknowledgement signal indicated that the previous data packet was received successfully, then the second data rate is selected to be equal or higher than the first data rate. If the acknowledgement signal indicated that the previous data packet contained errors, then the second data rate is selected to be equal or lower than the first data rate.

After the second data packet is transmitted at the second data rate, the process repeats with the data rate being used for transmitting a third data packet being determined on the basis of the content of the acknowledgement for the second packet.

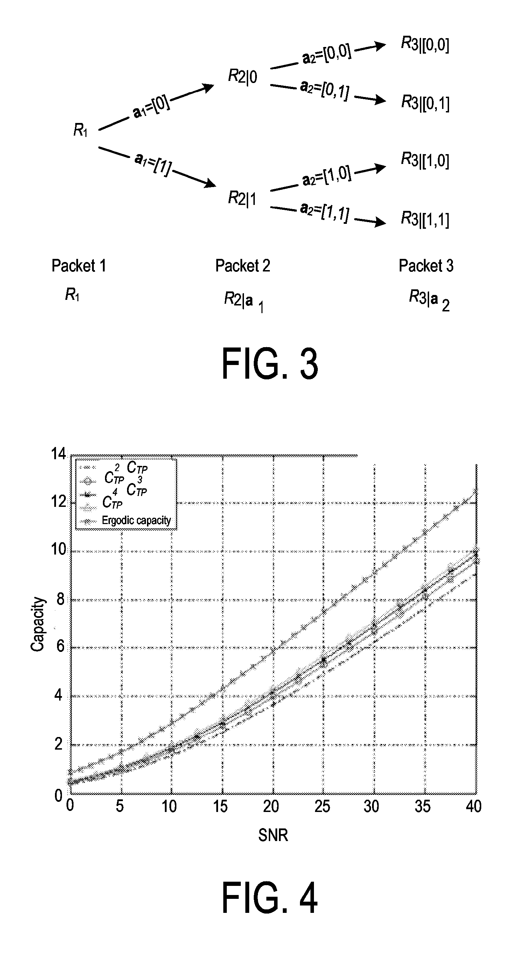

In a preferred embodiment of the invention, the data rate to be used to transmit the next data packet is derived from a rate tree. An exemplary rate tree is shown in Fig. 3 which has 'branches' showing data rates for three consecutive data packets. As can be seen, the data rate used for the second packet depends on the acknowledgement for the first data packet, and the data rate for the third packet depends on the acknowledgement for the first data packet and the acknowledgement for the second data packet.

In order for the destination node 4 to receive and decode data packets correctly, it must know the data rate used to transmit a particular data packet. In one embodiment of the invention, the source node 2 can include information about the data rate in the header or preamble of the packet which can be read by the destination node 4 before decoding.

In an alternative embodiment of the invention, the destination node 4 stores the acknowledgement history in a memory and uses this history with a copy of the rate tree to determine the rate that the source node 2 will use next.

More detailed embodiments of the invention will now be described with reference to Fig. 3 which shows a rate tree in accordance with the invention.

In the following, the data to be transmitted from the source node 2 to the destination node 4 is divided into 'super' packets consisting of '$K$' packets. The super packet is also described as a $K$-packet herein.

In the initialization stage, when the source node 2 first starts to communicate with the destination node 4, the source node 2 chooses a data rate, $R_1$, for the first packet. If the first packet is received correctly, the destination node 4 will send an ACK signal with a value of $A_1$=1 to the source node 2. Otherwise, an ACK signal with a value of $A_1$=0 is sent. Based on $\mathbf{a}_1$=$A_1$, the source node 2 will select a rate $R_{2|\mathbf{a}1}$ for the second packet (i.e. either rate $R_{2|0}$ or $R_{2|1}$). The ACK signal with value $A_2$ for the second packet in the $K$-packet, together with $A_1$, will then determine the next rate for transmission by the source node 2. The rate for the third packet is denoted as $R_{3|\mathbf{a}2}$, where $\mathbf{a}_2$=[$A_1$ $A_2$], and so on.

In general, given any ACK vector $\mathbf{a}_{k-1}$ = [$A_1$ $A_2$ ... $A_{k-1}$], k = 1, 2, ..., K, there is a corresponding data rate $R_{k|\mathbf{a}k-1}$. By definition, $\mathbf{a}_0$ is the empty vector. All the rates can be described by a rate tree. For example, Fig. 3 shows a rate tree where $K$=3. This gives a simple graphical interpretation of the rates used. All the rates in the tree can be combined as a single rate vector denoted as $\mathbf{r}_{all}$.

Preferably, the rate tree is determined offline and its values stored in a memory of the source node 2. For every $K$-packet, the rate tree is used to determine the actual rate to be used according to the history of the ACK signals. After the current $K$-packet has been transmitted, the rate tree is re-initialized and the process is repeated.

The performance measure that is optimized by this invention is the expected throughput averaged over all channels ACKs, denoted as

$$\tau_K\left(\overline{\gamma}, \mathbf{r}_{all}\right) = \frac{1}{K}\sum_{k=1}^{K} E_{h_k,\mathbf{a}_{k-1}}\left[R_{k|\mathbf{a}_{k-1}}\,\varepsilon\left(\overline{\gamma}, R_{k|\mathbf{a}_{k-1}}, h_k\right)\right] \qquad (1)$$

where $\varepsilon\left(\overline{\gamma}, R_{k|\mathbf{a}_{k-1}}, h_k\right)$ is the probability that the $k^{th}$ packet is received correctly using rate $R_{k|\mathbf{a}_{k-1}} \geq 0$ with channel $h_k$ at average SNR $\overline{\gamma}$. The operator $E_{h_k,\mathbf{a}_{k-1}}$ [.] denotes mathematical expectation over $h_k$ and $\mathbf{a}_{k-1}$.

The throughput is a function of the average signal-to-noise ratio (SNR) and $\mathbf{r}_{all}$. By maximizing $\tau_K$ with respect to the variable $\mathbf{r}_{all}$ (subject to the constraints imposed by the rate tree structure), the global optimal rate adaptation scheme $\mathbf{r}_{all}^{opt}$ at a given SNR is obtained.

The optimization can be carried out offline for a given $K$. The solution $\mathbf{r}_{all}^{opt}$ is then used for every $K$-packet in real time.

The optimization can be efficiently carried out if $\tau_K$ has a closed form or a simple structure. Otherwise, extensive simulations can be employed to carry out the optimization. In most cases, the complexity in determining the optimum solution increases exponentially with respect to $K$.

The invention will now be described in further detail with reference to a communication system with a time invariant channel (i.e. $h_k$=$h$ for all $k$) in which each packet in the $K$-packet is independently encoded.

The outage that we consider in this illustration is defined by the information outage as

$$\varepsilon\left(\overline{\gamma}, R_{k|\mathbf{a}_{k-1}}, h_k\right) = I\left(R_{k|\mathbf{a}_{k-1}} < \log\left(1 + \overline{\gamma}\,|\,h_k\,|^2\right)\right) \qquad (2)$$

where I(E) is an indicator function with output 1 if the event $E$ is true, and 0 otherwise. The throughput performance can then be assessed without considering a specific coding scheme. Moreover, the rates are assumed to be a real number although in practice only a discrete number of rates are available. When the practical coding/decoding scheme and rates are known, the same simulation methodology can be used to assess the performance improvement.

Set $h_k$=$h$ for all $k$ according to the time invariant assumption. The optimal rate tree is obtained by a numerical

search by maximizing $\tau_K$ at each average SNR. The throughput using the optimal rate tree, denoted as $C_{TP}^{K}$, is shown in Fig. 4 for $K$=1, 2, 3 and 4. For comparison, the ergodic capacity, which represents the largest possible throughput, is also shown. This requires full channel state information to be available before every packet is transmitted, which is practically difficult to implement.

Fig. 4 shows that increasing K allows a larger throughput to be realized. Hence, if the time invariant assumption is met over a large K, the rate tree approaches the ergodic capacity.

In the following embodiment of the invention, a system with a time invariant channel (i.e. $h_k$=h for all $k$) is considered in which packets are combined with the original erroneous packet to improve the decoding reliability. This is known as cross-packet encoding. Consider a packet structure when $K$-1 consecutive packets are erroneous in a $K$-packet, i.e. when $\mathbf{a}_{K-1}=\mathbf{0}_{K-1}$ (a row vector containing $K$-1 zeros).

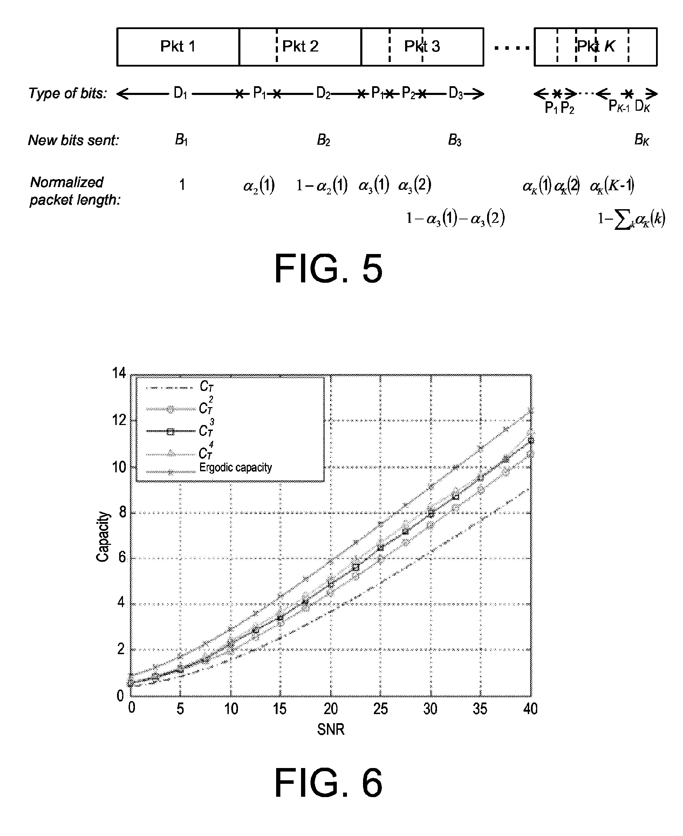

In general, it is possible that less than $K$-1 consecutive packets are erroneous, and the consecutive erroneous packets need not start in the first packet. Furthermore, there could be 2 or more consecutive bursts of erroneous packets within a $K$-packet. However, for each burst, regardless of burst length and start position, the method for performing cross packet coding is the same. The rates used and other parameters to be used depend on the actual situation. Fig. 5 shows a K-packet structure according to this embodiment of the invention.

All the timing periods are normalized to the packet interval, so the packet interval is treated as 1 second.

$D_k$ and $P_k$ denote the types of bits sent in the packets. $D_k$ denotes the data bits, and can also include some associated redundancy bits. $P_k$ denotes further redundancy bits for $D_k$. A main distinction between $D_k$ and $P_k$ is that new data bits are first introduced in $D_k$.

These notations are used to denote the bit types rather than the actual bit contents. The redundancy bits are generated from the data bits using an encoder in the source node 2. Any suitable encoder based on the rate compatible code convolutional code/turbo code/LDPC code can be used.

At the source node 2, the $K^{th}$ packet is transmitted given that $K$-1 consecutive earlier packets were erroneous. The number of new data bits transmitted in Pkt $k$ is denoted as $B_k$. $\alpha_k(i)$ is the normalized packet length used in Packet $k$ for transmitting the redundancy bits of $D_i$,

The packet structure for Pkt $k$ is completely specified by the set of parameters

$$S_k = \{B_k, \alpha_k(i), i = 1,2,...,k-1\}.$$

To fmd $S_k$, equate the effective rates of $D_k + P_k$ for all $k$ at Pkt $K$ as $R_k[0...0]$.

The rate $R_{k|}[0...0]$ is the rate parameter to be optimized, which is denoted as $R_k$ in the following.

When $K$=1, data is transmitted at rate $R_1=B_1$ and there is no possibility of recovering the packet if it is erroneous. Hence, for the method to work, K must be greater than 1.

When $K$=2, data is transmitted at rate $R_1=B_1$ for Pkt 1. In Pkt 2, $\alpha_2(1)$ seconds are used to transmit redundancy bits ($P_1$) for Pkt 1 since it is erroneous by definition. The rest of the time of $1-\alpha_2(1)$ seconds is used to transmit new data bits ($D_2$) which may possibly contains redundancy bits. The effective rate of $D_1+P_1$ and $D_2$ are set the same as

$$R_2 = B_1 / (1+\alpha_2(1)) = B_2 / (1-\alpha_2(1)) \qquad (3)$$

It is noted from (3) that

$$R_2=(B_1+B_2)/2 \qquad (4)$$

and therefore $R_2$ is allowed to vary from $R_1/2$ to $R_1$ assuming that sufficient bits are available to be transmitted in Pkt 2. It is noted that having $R_2 \leq R_1$ is not restrictive in the time invariant channel, since the rate should not be increased when an outage occurs in the previous packet. The lower bound $R_2=R_1/2$ is attained when $B_2=0$ and $\alpha_2(1)=1$. The lower bound cannot be decreased further given that $B_1$ bits have already been transmitted. Hence, this method results in no loss of optimality in throughput since there is no real restriction on the rate.

Therefore, using (3) for any $R_1/2 \leq R_2 \leq R_1$, $S_2$ can be found by calculating $\alpha_2(1)$ so that the effective rate of $D_1+P_1$ is $R_2$, and calculating $B_2$ so that the same effective rate of $D_2$ is also $R_2$.

When $K=3$, let $S_2$ be determined as described earlier. The effective rates of $D_1+P_1$, $D_2+P_2$ and $D_3$ are set to be the same as

$$R_3 = B_1 \, / \, \left(1 + \alpha_2(1) + \alpha_3(1)\right) = B_2 \, / \, \left(1 - \alpha_2(1) + \alpha_3(2)\right) = B_3 \, / \, \left(1 - \alpha_3(1) - \alpha_3(2)\right) \qquad (5)$$

Similarly from (5), the following property holds

$$R_3 = (B_1 + B_2 + B_3)/ \, 3 \qquad (6)$$

With (6), it is possible to conclude that $R_1/3 \leq R_3 \leq R_2$, $S_3$ can be found by calculating $\alpha_3(1)$ so that the effective rate of $D_1+P_1$ is $R_3$, calculating $\alpha_3(2)$ so that the effective rate of $D_2+P_2$ is $R_3$ and calculating $B_3$ so that the same effective rate of $D_3$ is also $R_3$.

In general, for any $K$ and any $R_1/K \leq R_K \leq R_{K-1}$, $S_K$ can be found by calculating $\alpha_K(i)$ so that the effective rate of $D_i+P_i$ is $R_K$, for i = 1, 2, ... , $K$-1, and calculating $B_K$ so that the same effective rate of $D_K$ is also $R_K$.

The following property holds

$$R_K = (B_1 + B_2 + ... + B_K)/ \, K. \qquad (7)$$

The optimality of such a method holds for any $K$. By optimality, this means that the rate restriction of

$$R_1/K \leq R_K \leq R_{K-1}, \text{ for all } K > 1 \qquad (8)$$

does not lead to a loss in optimality of throughput subject to the conditions: (a) the channel is time variant and (b) $B_1 + B_2 + ... + B_{K-1}$ bits have already been transmitted.

The throughput has to be modified since previous packets that are erroneous are allowed to be detected. A simplifying assumption that the error probability $\varepsilon\left(\overline{\gamma}, R_{k|a_{k-1}}, h_k\right)$ does not depend on the length of the codeword used in the packet is made. This assumption is appropriate when the packet length is sufficiently large, but it depends generally on the actual code/decoding used.

Consider the case when $\mathbf{a}_{k-1} = [\mathbf{b} \, 1 \, \mathbf{0}_m]$, where $\mathbf{b}$ is an arbitrary row vector of length $(k-2-m)$ containing 0 and 1, and $\mathbf{0}_m$ is the zero row vector of length m. (Therefore, the last $m$ elements of $\mathbf{a}_{k-1}$ are zeros and not more). Using the joint decoding method mentioned, and if no outage occurs for the $k$th packet, the data bits $(B_{k-m+1} + B_{k-m+2}...+B_k) = mR_{k|a_{k-1}}$ are recovered. Similarly, when $\mathbf{a}_{k-1} = [\mathbf{0}_{k-1}]$, the data bits $(B_1 + B_2...+B_{k-1}) = (k-1) \, R_{k|a_{k-1}}$ can be recovered.

Hence the throughput becomes

$$\tau'_K\left(\overline{\gamma}, \mathbf{r}_{\text{all}}\right) = \frac{1}{K}\sum_{k=1}^{K} \mathrm{E}_{h_k, \mathbf{a}_{k-1}}\left[R'_{k|\mathbf{a}_{k-1}} \, \varepsilon\left(\overline{\gamma}, \, R_{k|\mathbf{a}_{k-1}}, h_k\right)\right] \qquad (9)$$

where

$$R'_{k|\mathbf{a}_{k-1}} = \begin{cases} mR_{k|\mathbf{a}_{k-1}}, & \text{where } \mathbf{a}_{k-1} = \left[\mathbf{b}\,1\,\mathbf{0}_m\right], m > 1, \\ (k-1)R_{k|\mathbf{a}_{k-1}}, & \text{where } \mathbf{a}_{k-1} = \left[\mathbf{0}_{k-1}\right], k \geq 2, \\ R_{k|\mathbf{a}_{k-1}}, & \text{otherwise} \end{cases} \qquad (10)$$

subject to appropriate rate restrictions such as given in (8).

Compared to the original expression for throughput, this scheme tries to recover the throughput whenever an outage occurs. Numerical optimization for the throughput allows the rate tree to be obtained.

The optimal rate tree is obtained by a numerical search by maximizing $\tau'_K$. The throughput using the optimal rate tree is shown in Fig. 6 for $K$=1, 2, 3 and 4. A significant improvement in throughput is achieved.

There is therefore provided a method and apparatus for a packet-switched wireless communication system by which the data throughput can be maximized.

## Claims

1.    A method for use in a packet-switched communication system, the method comprising:

   - sending a plurality of data packets from a source node to a destination node;
   - sending an acknowledgement from the destination node to the source node for each packet indicating whether each data packet has been correctly received; and
   - determining a rate at which to transmit each of said data packets from the source node to the destination node on the basis of the received acknowledgements relating to each of the previously transmitted data packets in said plurality of packets.

2.    A method as claimed in claim 1, wherein the rate is selected from a set of predefined rates, wherein there is a predefined rate in the set for each possible combination of received acknowledgements relating to each of the previously transmitted packet or packets.

3.    A method as claimed in claim 2, wherein the set of predefined rates are stored in the source node.

4.    A method as claimed in claim 3, wherein the set of predefined rates are stored in the destination node, and the destination node determines the rate used to transmit each packet on the basis of the acknowledgements sent to the source node relating to each of the previously received packets.

5.    A method as claimed in claim 1, 2, 3 or 4, wherein the source node indicates the rate used to transmit each packet to the destination node.

6.    A method as claimed in claim 5, wherein the source node indicates the rate used to transmit each packet to the destination node in a header of the packet.

7.    A method as claimed in any of claims 1 to 6, wherein after a predetermined number of packets K, the received acknowledgements for each of the K previously transmitted packets are ignored when determining the rate at which to send the K+1th and subsequent packets.

8.    A method as claimed in any preceding claim, wherein each data packet includes error detection information for the data in that data packet.

9.    A method as claimed in any preceding claim, wherein on receipt of an acknowledgement indicating that a packet has been received with errors, the source node retransmits the previous data packet at a new data rate determined on the basis of the received acknowledgements relating to each of the previously transmitted data packets.

10.   A method as claimed in any preceding claim, wherein each data packet includes error correction information for the data in that packet.

11. A method as claimed in claim 10, wherein on receipt of an acknowledgement indicating that a packet has been received with errors, the source node transmits further error correction information for the previous packet with the next data packet.

12. A source node for use in a packet-switched communication system, the source node comprising:

- means for sending a plurality of data packets to a destination node;
- means for receiving an acknowledgement from the destination node for each packet indicating whether each data packet has been correctly received; and
- means for determining a rate at which to transmit each of said data packets to the destination node on the basis of the received acknowledgements relating to each of the previously transmitted data packets in said plurality of packets.

13. A source node as claimed in claim 12, wherein the means for determining the rate is adapted to select the rate from a set of predefined rates, wherein there is a predefined rate in the set for each possible combination of received acknowledgements relating to each of the previously transmitted packet or packets.

14. A source node as claimed in claim 13, further comprising storage means for storing the set of predefined rates.

15. A source node as claimed in claim 14, wherein the means for sending is further adapted to send an indication of the rate used to transmit each packet.

16. A source node as claimed in claim 14, wherein the means for sending is adapted to send the indication in a header of each packet.

17. A source node as claimed in any of claims 12 to 16, wherein after a predetermined number of packets K, the source node is adapted to ignore the acknowledgements received for each of the K previously transmitted packets when determining the rate at which to send the K+1th and subsequent packets.

18. A source node as claimed in any of claims 12 to 17, wherein the means for sending is further adapted to send error detection information for the data in each data packet to the destination node.

19. A source node as claimed in any of claims 12 to 18, wherein on receipt of an acknowledgement indicating that a packet has been received with errors, the source node is adapted to retransmit the previous data packet at a new data rate determined on the basis of the received acknowledgements relating to each of the previously transmitted data packets.

20. A source node as claimed in any of claims 12 to 19, wherein the means for sending is further adapted to send error correction information for the data in each data packet to the destination node.

21. A source node as claimed in claim 20, wherein on receipt of an acknowledgement indicating that a packet has been received with errors, the means for sending is adapted to transmit further error correction information for the previous packet with the next data packet.

22. A destination node for use in a packet-switched communication system, the destination node comprising:

- means for receiving a plurality of data packets from a source node;
- means for generating and sending an acknowledgement to the source node for each packet indicating whether each data packet has been correctly received; and
- means for determining a rate at which each of said data packets will be sent from the source node, the rate being determined on the basis of the sent acknowledgements relating to each of the previously received data packets in said plurality of packets.

23. A destination node as claimed in claim 22, wherein the means for determining the rate is adapted to select the rate from a set of predefined rates, wherein there is a predefined rate in the set for each possible combination of received acknowledgements relating to each of the previously received packet or packets.

**24.** A destination node as claimed in claim 23, further comprising storage means for storing the set of predefined rates.

**25.** A destination node as claimed in any of claims 22 to 24, wherein after a predetermined number of packets K, the destination node is adapted to ignore the acknowledgements received for each of the K previously transmitted packets when determining the rate at which the K+1th and subsequent packets will be sent.

**26.** A packet-switched communication system, comprising at least one source node as claimed in any of claims 12 to 21 and at least one destination node as claimed in any of claims 22 to 25.

**27.** A packet-switched communication system, comprising:

- at least one source node as claimed in any of claims 12 to 21; and
- at least one destination node, the destination node comprising:
- means for receiving a plurality of data packets from a source node;
- means for generating and sending an acknowledgement to the source node for each packet indicating whether each data packet has been correctly received; and
- means for determining a rate at which each of said data packets have been sent from the source node by reading the rate from a header portion of each of the data packets in said plurality of packets.

FIG. 1

FIG. 2

$R_1$ $\xrightarrow{\ \mathbf{a}_1=[0]\ }$ $R2|0$ $\xrightarrow{\ \mathbf{a}_2=[0,0]\ }$ $R3|[0,0]$

$\xrightarrow{\ \mathbf{a}_2=[0,1]\ }$ $R3|[0,1]$

$\xrightarrow{\ \mathbf{a}_1=[1]\ }$ $R2|1$ $\xrightarrow{\ \mathbf{a}_2=[1,0]\ }$ $R3|[1,0]$

$\xrightarrow{\ \mathbf{a}_2=[1,1]\ }$ $R3|[1,1]$

Packet 1       Packet 2       Packet 3

$R_1$       $R2|\mathbf{a}_1$       $R3|\mathbf{a}_2$

# FIG. 3

FIG. 4

| Pkt 1 | Pkt 2 | Pkt 3 | · · · · | Pkt K |
|-------|-------|-------|---------|-------|

Type of bits: $\longleftarrow$ — $D_1$ — $\longmapsto$ $P_1$ $\longmapsto$ — $D_2$ — $\longmapsto$ $P_1$ $\longmapsto$ $P_2$ $\longmapsto$ — $D_3$ — $\longrightarrow$    $\longleftarrow\!\!*\!\!\longrightarrow$ · · · $\longleftarrow\!\!*\!\!\longrightarrow$
$P_1 P_2$        $P_{K-1}$ $D_K$

New bits sent:    $B_1$    $B_2$    $B_3$    $B_K$

Normalized
packet length:    1    $\alpha_2(1)$    $1-\alpha_2(1)$    $\alpha_3(1)$    $\alpha_3(2)$    $\alpha_K(1)$ $\alpha_K(2)$    $\alpha_K(K\text{-}1)$

$$1-\alpha_3(1)-\alpha_3(2) \qquad 1-\sum_k \alpha_K(k)$$

# FIG. 5

# FIG. 6

**European Patent Office**

**EUROPEAN SEARCH REPORT**

Application Number

EP 05 10 8963

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2004/004194 A (INTERNATIONAL BUSINESS MACHINES CORPORATION; JELITTO, JENS; NOLL BARRE) 8 January 2004 (2004-01-08)<br><br>* page 1, line 3 - line 6 *<br>* page 2, line 14 - line 17 *<br>* page 3, line 11 - line 15 *<br>* page 5, line 9 - line 15 *<br>* page 7, line 22 - line 25 *<br>* figure 2 * | 1-3,5,6,<br>8,12-16,<br>18,22,<br>23,26,27 | H04L1/18<br>H04L1/00<br>H04L1/16 |
| X | US 2002/176362 A1 (YUN YOUNG WOO ET AL) 28 November 2002 (2002-11-28)<br><br>* page 1, paragraph 25 *<br>* page 3, paragraph 56 *<br>* page 3, paragraph 62-64 *<br>* page 4, paragraph 75 *<br>* page 9, paragraph 162 - paragraph 165 * | 1-4,<br>8-14,<br>18-24,26 | |
| X | KAMERMAN A ET AL: "WAVELAN-II: A HIGH-PERFORMANCE WIRELESS LAN FOR THE UNLICENSED BAND" BELL LABS TECHNICAL JOURNAL, WILEY, CA, US, vol. 2, no. 3, 21 June 1997 (1997-06-21), pages 118-133, XP000703744 ISSN: 1089-7089 * page 133, column 1, line 1 - line 18 * | 1,2,7,8,<br>12,13,<br>17,18,<br>22,23,<br>25,26 | **TECHNICAL FIELDS SEARCHED (IPC)**<br><br>H04L |
| A | EP 1 211 839 A (LUCENT TECHNOLOGIES INC) 5 June 2002 (2002-06-05) | 1-27 | |
| A | WO 2004/002049 A (XTREMESPECTRUM, INC) 31 December 2003 (2003-12-31) | 1-27 | |
| A | WO 02/37743 A (NORTEL NETWORKS LIMITED; WANG, CHAO HF; MING, JIA; GARMONOV, ALEXANDER) 10 May 2002 (2002-05-10) | 1,10,11 | |

The present search report has been drawn up for all claims

| Place of search | Date of completion of the search | Examiner |
|---|---|---|
| The Hague | 26 January 2006 | Kazaniecki, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

               

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 10 8963

This annex lists the patent family members relating to the patent documents cited in the above-mentioned European search report.
The members are as contained in the European Patent Office EDP file on
The European Patent Office is in no way liable for these particulars which are merely given for the purpose of information.

26-01-2006

| Patent document cited in search report | | Publication date | Patent family member(s) | | Publication date |
|---|---|---|---|---|---|
| WO 2004004194 | A | 08-01-2004 | AU | 2003244918 A1 | 19-01-2004 |
| | | | CN | 1692594 A | 02-11-2005 |
| | | | DE | 60302160 D1 | 08-12-2005 |
| | | | JP | 2005531968 T | 20-10-2005 |
| | | | US | 2005286410 A1 | 29-12-2005 |
| US 2002176362 | A1 | 28-11-2002 | CN | 1376000 A | 23-10-2002 |
| | | | EP | 1244240 A2 | 25-09-2002 |
| EP 1211839 | A | 05-06-2002 | AU | 9344701 A | 30-05-2002 |
| | | | BR | 0105442 A | 09-07-2002 |
| | | | CA | 2360720 A1 | 29-05-2002 |
| | | | CN | 1356795 A | 03-07-2002 |
| | | | JP | 2002199014 A | 12-07-2002 |
| | | | US | 2002103953 A1 | 01-08-2002 |
| WO 2004002049 | A | 31-12-2003 | AU | 2002318281 A1 | 06-01-2004 |
| | | | CN | 1656729 A | 17-08-2005 |
| | | | EP | 1525703 A1 | 27-04-2005 |
| WO 0237743 | A | 10-05-2002 | AU | 3064201 A | 15-05-2002 |
| | | | CA | 2427491 A1 | 10-05-2002 |
| | | | EP | 1334581 A1 | 13-08-2003 |

EPO FORM P0459

For more details about this annex : see Official Journal of the European Patent Office, No. 12/82